# EUROPEAN PATENT APPLICATION

(11) **EP 0 810 548 A1**
(43) Date of publication of application: **03.12.1997**
(21) Application number: 96925764.1
(22) Date of filing: 05.08.1996
(51) Int. Cl.: G06M 1/272, G06M 1/10, G01D 5/34

(54) **MECHANICAL METER WITH REMOTE READING CAPACITY**

(30) Priority: 08.09.1995 ES 9501769
(71) Applicant: Alvarez Fernandez, Modesto, 36203 Vigo (ES)
(72) Inventor: ALVAREZ FERNANDEZ, Modesto, E-36203 Vigo (ES); FERNANDEZ GONZALEZ, José Maria, E-36210 Vigo (ES)
(86) International application number: ES9600157
(87) International publication number: WO9709693

(57) **Abstract**

The invention relates to a remote reading meter. It is comprised of a disc or a drum divided into two zones at its external or peripheral surface, the first zone being made of high absorbing material (black) which absorbs the radiation emited, and the second zone being made of low absorbing material (white) absorbing radiations. At the vicinity of said surface, the sensor is arranged which comprises an emitter and a receiver, and which detects the radiation reflected by the absorbing zone. The frequency of the pulses generated at the receiver is proportional to the consumption or to the rotational velocity of the drum. The emitter-reciver assemby may be substituted by two optical fibres with emitter-receiver at the beginning. The emitter emits at a frequency remote from the light spectrum in order to avoid the interferences of the solar light. The device is connected to a control center in order to evaluate by data processing the consumption generated. The device can be applied to any type of meter. It solves the problem of displacement of a man to read meters.

## Description

The present invention referes to a mechanical meter device, and a procedure of implementation, through which a modification in present mechanical wheel meters will lead to remote reading and automatic reading thereof, giving datas that may be processed in real time with a computer.
The modification can be made during the production process, in meters that have been made, or even in meters in use.

### BACKGROUND ART

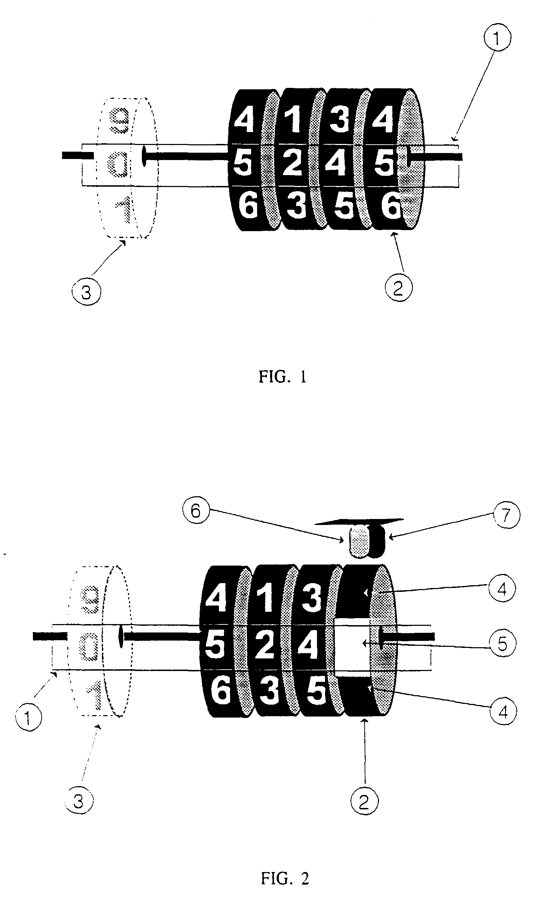

Nowadays various industrial activities such as distribution of gas, water, electricity, automatic vending machines or mass production process, use meters that in most cases go with an indicator formed by wheels which number depends on the maximum value to be reached as in FIG. 1. The operation is such that each wheel has drawn or engraved the numbers from 0 to 9, and each time a wheel turns completely, the left side one moves forward one digit so that the value we can read in the visor is, without considering the least weight digit, the number of turns gived by the right side wheel FIG.1(2), which shows tenths of turn. The total meter value. represents as the case: cubic metres, watthour, screws, etc. and including decimals if necessary.

These mechanical indicators are simple and reliable enough but have the important obstacle such that, for the reading, it is necessary a meterman to go, see and write the values. This supposes a great cost and risk of error due to the manual reading. In case we talk about nets with a lot of meters, such as gas nets, water nets or electricity nets it is necessary to process the datas to invoice, make statistics, etc. copying them in a computer by a manual or semiautomatic way that converts the process in a slow and expensive one. The results are always refered to behind datas and in case of price changes, as with operation of gas nets, it imply the reading of all meters each week, which is very costly if done manually.

The invention permits the companies that operate with this kind of nets, (thousands of meters) to have access, in real time, and automatically, to datas, using a computer with a modem that captures and processes them, mixing the datas with their computer applications, to give, e.g. a detailed invoice.

Due to a modification or implementation technically simple in present meters, is possible to change the present installations, in most cases, without changing all the meter.

In production process, the cost added to the meter is minimum, making it competitive with digital electronic meters, which are much more expensive ones.

### DESCRIPTION OF THE DRAWINGS

FIG. 1, represents a conventional wheel meter indicator, the number of wheels depend on maximum reachable value (3), by each turn a wheel gives, the left side one, goes up one digit. The right side one is the least weight one, (2). Through the visor (1) we can see the meter value.

FIG. 2, represents an indicator with the possibility of remote reading in line with the invention. The right wheel is changed or covered with a substance of two colours BLACK AND WHITE distributed in two areas. The relation in size does not vary the working characteristics, but it is better neither of each zones be less than the size of a digit, because it would suppose a faster response in the associated electronic device. Next to the wheel we put a sensor formed by a radiation emitter (6) and a receiver (7).

FIG. 3, represents the diagram of a complete remote reading system as used in the invention, the receiver of the sensor (1) detects an increase in reflected radiation when the white area passes facing the sensor, what produces an increment of voltage in the receiver (1) which is interpreted as a turn by the electronic device (3), increasing the content of a memory associated to the meter. The control center (6), comunicates with the electronic device through a modem (4) (5) acceding to that value. The electronic device is able to serve various sensors with its associated meters.

FIG. 4, represents a gas meter of common use in present nets, modified as the invention, for remote reading.

FIG. 5, represents the meter indicator when is separated from the meter. There exist some kinds of gas meters which use the same type of indicator.

FIG. 6, represents the same indicator in back view, where we can distinguish the sensor and the two colour wheel.

FIG. 7, the same figure with the sensor dismantled, in which we can notice the window opened in the casing, and where the sensor must be positioned and fixed.

FIG. 8, shows another possibility of implementation of the idea, putting the sensor (1), (2) next to one of the wheel faces (bases), near the edge, in place of situating near from the cilindric revolution surface; the mentioned face has two sectors of two colours with high (3) and low (4) absortion (of radiation).

### PRACTICAL IMPLEMENTATION

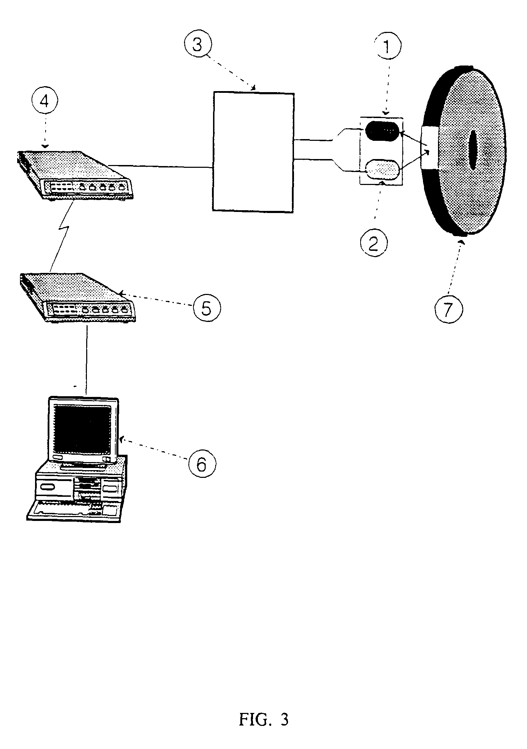

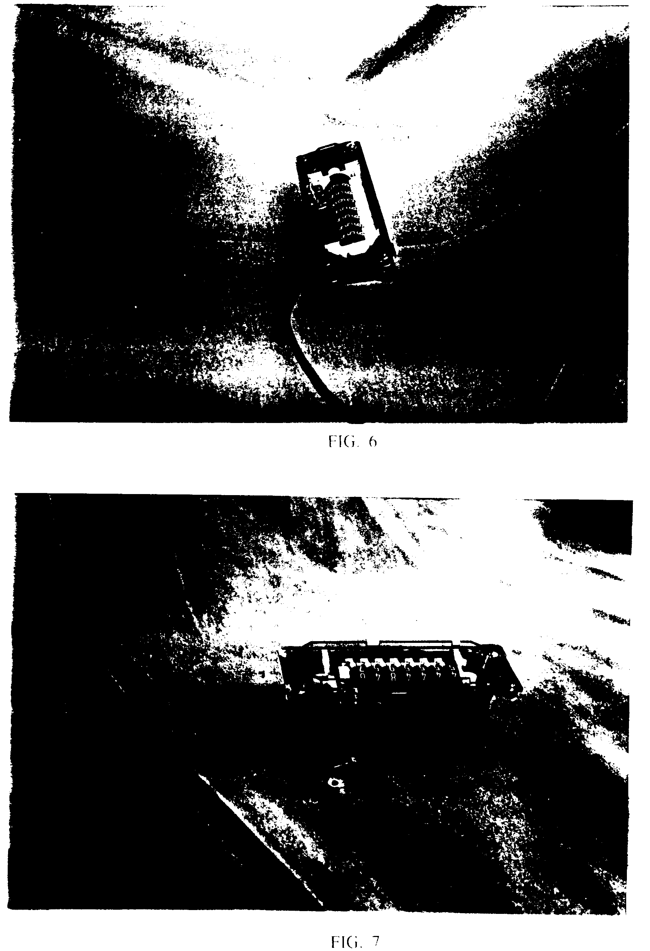

In order to the practical implementation of the idea for the invention, it is necessary to distinguish between two distinct situations, according to the production or the modification of meters already made or working. In both cases the object related to the invention is the meter indicator, where, in a part of them, the rotatory wheels are installed FIG. 5. In the production process the wheel that has the least weight digits (right side one), is replaced by other with identical shape but made in two colours, black and white. When refering to colours we must not limit to the concept of visible light so that we can use radiation not visible such as infrared, ultraviolet, or even electromagnetic radiation. In any case, BLACK means that absorves the radiation perfectly and WHITE that reflects it nearly completely. Next to the wheel surface and perpendicular to the same, we put a little electronic circuit formed by an emitter and a receiver. The emitter will usually be an infrared LED and the receiver a PHOTODIODE sensible to the radiation, soldered in a little printed circuit and fixing this circuit by a screw to the casing such as in FIG. 6. From this circuit three conductor wires: One for drive the emitter, other to receive the sensor voltage and the third, common to both, is the mesh of the wire that joins the others with the electronic device FIG. 3 (3);if the electronic device associated to the sensor needs four cables, the connection can be to four wires separating emitter and receiver.

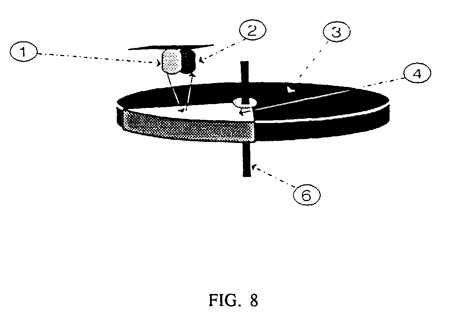

The electronic device FIG. 3 (3), drives the emitter with an intensity matched so that the receiver perfectly detects the radiation reflected by the wheel, when in front of them is the WHITE zone, in case of being in the BLACK zone, no measurable signal is detected. To avoid interferences coming from outside light, the electronic device can drive the emitter with an impulsive signal or a high frequency modulated one so as to produce, when reflected in the WHITE area, a differentiated signal. Nevertheless, the simplest implementation way is with a continuous driving, shielding from radiation, if necessary, with an opaque painting or changing the casing if it were transparent. In any case the principle of working is the same: as the wheel turns, the two zones BLACK and WHITE repeatedly go in front of the sensor, producing in this one a wave of period equal to the wheel rotation; as we initiate the electronic device with the same value of the mechanical indicator and we track the wave generated by the sensor we have in every moment the value showed by the indicator only counting the periods of the electric wave coming from the sensor, job done by the electronic device. The lose of the least significative digit (least weight one) produced by the change of the wheel, has usually no importance because it represents hundreths or thousandths of the unit of measure, and it is compensated as turns passes. Nevertheless, in certain meters, there exists a wheel which moves this one of less weight and which there has no digit printed, or, as in electricity meters, has a mark to detect turns. In this case, we could use this wheel to the objective exposed, simplifying the implementation; we can also take the idea showed in FIG. 8, where the sensor goes next to one of the bases of the wheel , which goes painted or made in two colour sectors. The advantage that supposes this last possibility - to modify a wheel that does not belong to the mechanical indicator- is that we could substitute the wheel indicator by a display or digital indicator, controlled by the own electronic device FIG.3 which controls the sensor, device that makes the correspondence between turns and units of measure. As the same electronic device is able to service various sensors, we could use the same display and give complete information without excessive cost.

In case of using the invention with present meters , if possible, the meter indicator is changed by one modified or made as the invention. After that, the original indicator can be modified by painting the least weight wheel with BLACK and WHITE and adding the group emitter-receiver, therefore prepared to be used again. This modification could also be done in the meter without changing the indicator although this could turn out more complex.

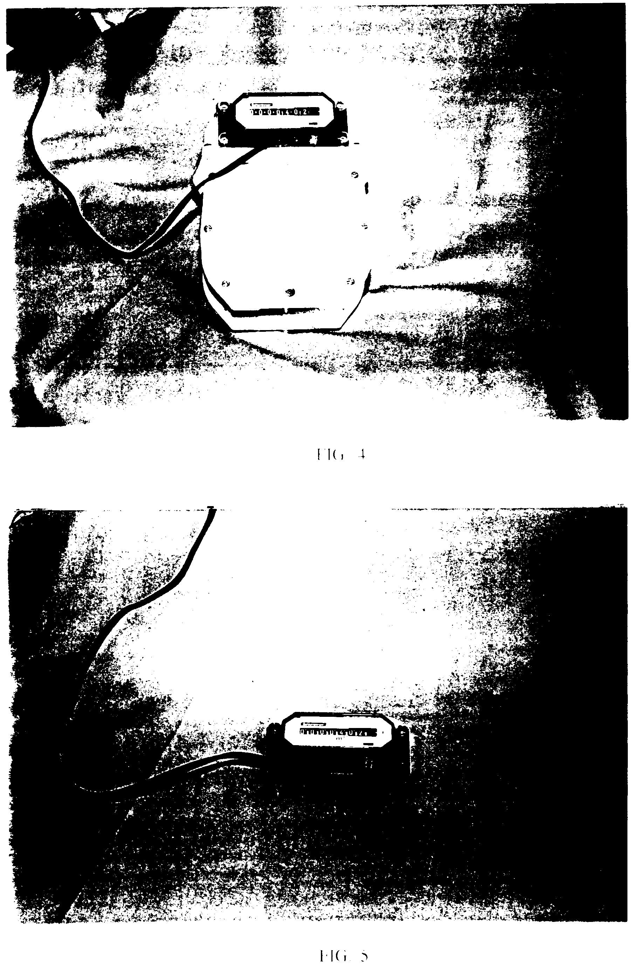

Going on with figures FIG. 4, FIG. 5, FIG.6 and FIG.7 we can see the modification process of a gas meter. The painting of the transparent casing is optional, and necessary only if we want to simplify to the maximum the electronic device functions.

### APPLICATIONS

The device related to the invention has application in any type of mechanical meter which needs remote reading, although the clearest field of application is that of gas, electricity or water nets, due to the next reasons;
- It is possible a better management of the net, because we have real time datas which permit an automatic full invoice, differenciation of high and low consume customers, forecast of consumes, information to dimensionate the nets, etc.
- The meters are usually identical, and in the form of the type mentioned in the invention, what permits a modification or mass production at a lower cost.
- The meters use to be grouped all together in a meters room, what permits that the same electronic device serve all them, simplifying the installation and lowering the cost by meter.

In case of gas nets, we have made an allowance of an electronic device which serves untill 32 meters, device provided with a microprocessor which samples the sensors and saves in memory the real time datas. In a full installation to a block of buildings, will put one of these type of systems in each meter room, joined all them by four wires, two for communications and the other pair for *telefeed,* constituting a net that can serve up to 512 meters. In this net, one of the systems has the supply for telefeed and a modem connected to a telephone conventional line so as to give the control center access to datas of all devices. In case of already installed nets, it will be installed an electronic device in each meter room and the indicators will be changed by ones of the invention, with the possibility of reuse as said before.

## Claims

1. Meter device of remote reading, characterized by having a wheel with its surface covered by two colours, distributed in two areas, or made by two materials, one of them very absorbent (black) for a kind of radiation, and the other very little absorbent (white), next to the wheel is found a sensor constituted by an emitter and a receiver of such radiation, sensor which detects, due to reflection of radiation, when the white zone, in its turn, is passing in front of the sensor. Each turn of the wheel will produce in the receiver a variable tension of the same period as the rotation of the wheel, what permits an electronic device, connected to the sensor by wires, to know, in each moment, the number of periods counted, and this will match the value indicated by the mechanical meter, if we always initiate them with the same value.

2. A device as in claim 1, characterized because the emitter and receiver do not go next to the wheel but go in the electronic associated device, two optical fibers join the group emitter-reciver with the two-colour wheel of the meter, the fiber ends go next to the wheel surface, one of the fibers emits radiation and the other receives it. This type of implementation permits the wheel to have a minimal size, as the place of the sensor is used by two optical fiber ends.

3. A device as in claims 1 and 2, in which the emitter operates at a frequency far away from luminous spectrum so as to eliminate, as much as possible, the solar interference and conventional light emision interference.

4. A device as in claims 1 to 3 characterized because the source of radiation is modulated at a certain frequency or in an impulsive way, so as to the electronic device connected to the receiver be able to discriminate the variable signal from the continuous one, originated from solar light or an artificial external light, avoiding interferences.

5. A device as in claims 1 to 4 in which the rotatory wheel, is not painted in the cylindrical revolution surface but in one of the bases, which is divided in two sectors one of each colour. Next to this surface goes the emitter-reciever.

6. A device as in claims 1 to 5 characterized by not existing the wheels of the mechanical indicator but a two colour wheel which turns with an angular velocity proportional to the consume to measure; the same electronic device connected to the sensor receiver shows in a display or a screen (LCD, etc) the meter status.

7. A device as in claims 1 to 6 in which the wheel has an even number of zones alternating colours, the out frequency of the sensor receiver will be a multiple of two of the turn frequency of the wheel what permits an increase of precision.

8. A device as in claims 1 to 7 characterized by the group emitter, receiver, and two-colour rotatory wheel is fully isolated of external light, being the casing opaque, avoiding all kind interferences.

9. A device as in claims 1 to 8 in which there is a wheel made of non metallic material wherein the band of one colour is substituted by a metallic material or a metallic ink, and the receiver by a sensor of metal of very little size, saving the emitter and avoiding luminous interferences.

10. A production procedure, associated to claim 1, that permits the mechanical wheel indicators of common use to be converted into remote reading meters as claim 1. The procedure is characterized because the least weight wheel is changed or covered by a two-colour substance, and next to the surface a sensor as in claim 1 must be situated fixing it to the casing.

11. An application of the device related to claims 1 to 9, characterized by incorporate all electronic circuits which permit remote reading of one or more meters from a control center and the computer process of the datas.
